(19)

**Europäisches Patentamt**
**European Patent Office**
**Office européen des brevets**

(11) **EP 2 093 114 A1**

(12) **EUROPEAN PATENT APPLICATION**

(43) Date of publication:
**26.08.2009 Bulletin 2009/35**

(51) Int Cl.:
***B60T 8/172*** *(2006.01)*

(21) Application number: **08003318.6**

(22) Date of filing: **23.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **GM Global Technology Operations, Inc. Detroit, MI 48265-3000 (US)**

(72) Inventors:
• **Trönnberg, Gabriel**
  **46375 Hjärtum (SE)**
• **Alfredsson, Samuel**
  **46042 Frändefors (SE)**

(74) Representative: **Strauss, Peter**
  **Adam Opel GmbH**
  **Patentrecht, A0-02**
  **65423 Rüsselsheim (DE)**

(54) **Method and apparatus for estimating the side-slip angle of a vehicle**

(57)     A method of estimating the side-slip angle of a vehicle on arbitrary ground, comprises the steps of:
a) continuously producing a first estimate ($\beta^*_1$) of the side-slip angle ($\beta$) for a first type of ground based on vehicle kinematic data;
b) continuously producing a second estimate ($\beta^*_2$) of the side-slip angle for a second type of ground based on vehicle kinematic data;
c) detecting vehicle lateral acceleration (AY);
d) based on said detected lateral acceleration (AY), estimating a current value ($\mu^*$) of the friction coefficient ($\mu$) between the tires of the vehicle and the ground;
e) if the estimated current value ($\mu^*$) is similar to the friction coefficient ($\mu_1$) of the first type of ground, outputting the first estimate ($\beta^*_1$);
f) if the estimated current value ($\mu^*$) is similar to the friction coefficient ($\mu_2$) of the second type of ground, outputting the second estimate ($\beta^*_2$); and
g) if the estimated current value ($\mu^*$) is in a range ($\mu_c \leq \mu^* > \mu_d$) between the friction coefficients ($\mu_3$, $\mu_2$) of said first and second types of ground, outputting an estimate ($\beta^*$) between said first and second estimates ($\beta^*_1$, $\beta^*_2$).

Fig. 1

EP 2 093 114 A1

**Description**

The present invention relates to electronic stability control of motor vehicles, in particular to a method and an apparatus for estimating a vehicle side-slip angle.

Electronic stability control (ESC) is a system which helps maintain vehicle stability during cornering, commonly by selectively applying brake pressure to one or more wheels. The main aim of ESC is to help the driver prevent uncontrollable and/or unstable behaviour of the vehicle before it leads to a serious accident. By controlling the braking force individually for each wheel of a vehicle, a yaw moment is applied to the vehicle, by which the yaw rate of the vehicle can be controlled to be as close as possible to the yaw rate desired by the driver.

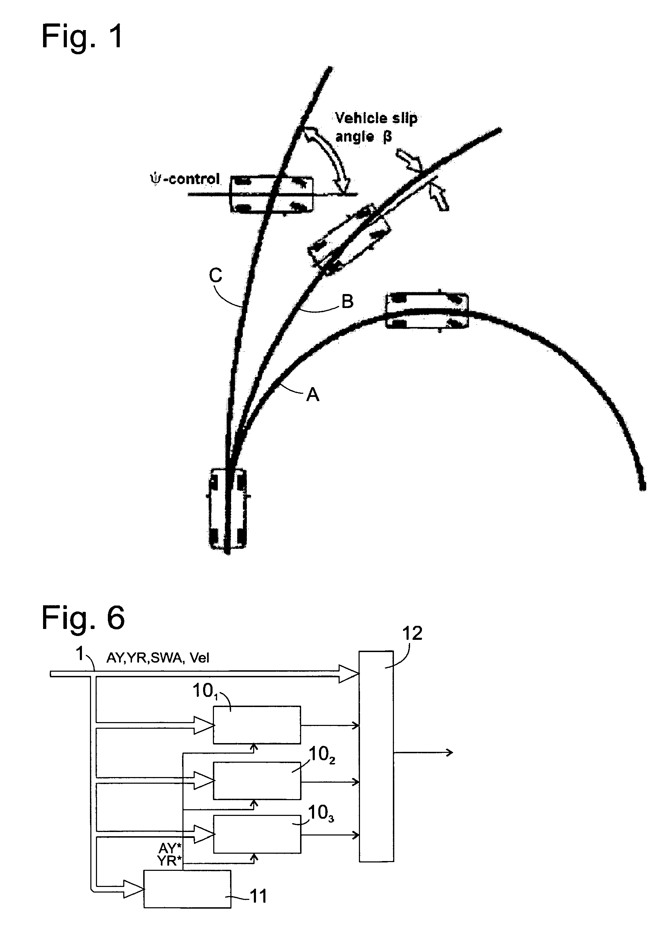

However, control of the yaw rate alone is not sufficient to ensure stable behaviour of the vehicle, as is apparent from Fig. 1. This Fig. illustrates three possible trajectories of a vehicle at a same yaw rate on different types of ground. Trajectory A is on a high friction road. The vehicle follows trajectory A if the measured yaw rate is equal to the desired yaw rate, and side-slip of the vehicle is negligible. On a low friction road, as shown for trajectories B and C, the yaw rate may still be equal to the desired yaw rate, but the trajectory is not. If the driver tried to correct the course of the vehicle by adding additional steering input towards the desired trajectory, the desired yaw rate would increase, and hence, the vehicle body side-slip angle $\beta$ would obviously increase even faster than before. When the angle $\beta$ increases beyond a certain level, the vehicle does no longer respond well to steering input and eventually becomes impossible to control.

In order for an ESC system to be able to recognize situations corresponding to trajectories B and C and to warn the driver or to take appropriate automatic countermeasures before it comes to a loss of control, a reliable real-time estimation of the side-slip angle is needed.

In principle, it is possible to calculate the side-slip angle based on kinematic quantities of the vehicle such as longitudinal velocity, yaw rate and/or lateral acceleration, and on the friction coefficient between the tires of the vehicle and ground. While the kinematic quantities can be conveniently detected on board the vehicle, the friction coefficient can at best be estimated.

A. Nishio et al., "Development of vehicle stability control system based on vehicle side-slip angle estimation", SAS, No. 2001-01-0137, discloses a conventional method and apparatus for estimating the side-slip angle. According to this document, three observers are provided for estimating the side-slip angle of a vehicle based on its kinematic quantities, each of which is tuned for a different type of ground. Based on vehicle speed and yaw rate, an expected lateral acceleration is calculated for three estimated side-slip angles provided by the three observers, and the expected lateral accelerations are compared to the actually measured lateral acceleration. The observer, whose side-slip angle gave the best prediction of the lateral acceleration is then assumed to provide the correct side-slip angle.

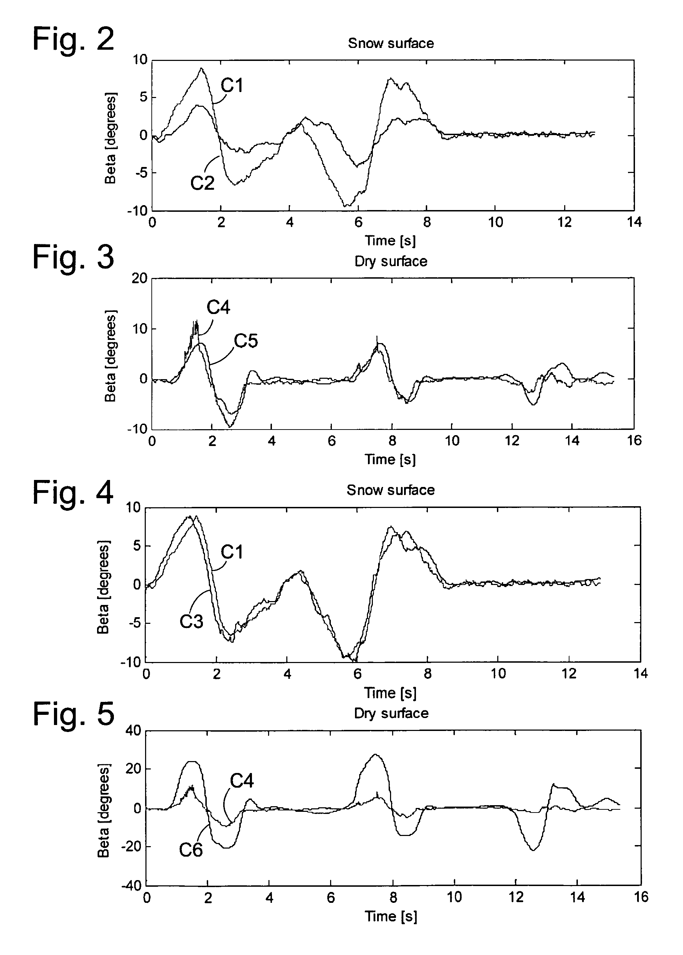

Of Nishio's three observers, one estimates the side-slip angle assuming the friction coefficient between tire and ground to be that of a dry road surface, the second assumes the friction coefficient to be that of snow, and the third, of ice. The quality of the estimate depends critically on the friction coefficient, as becomes apparent from Fig. 2 to 5. Each of these figures shows a plot over time of measured side-slip angles $\beta$ and side-slip angles $\beta^*$ estimated by different observers under different road conditions. Namely, in Fig. 2 and 4, curve C1, identical in both figures, illustrates a series of side-slip angles $\beta$ measured on a snow surface whereas curve C2 gives the corresponding estimates $\beta^*$ of side-slip angles by an observer tuned for dry surface, and C3 gives estimates $\beta^*$ of an observer tuned for a snow surface. While there is a fair agreement between curves C1 and C3, there are gross discrepancies between C1 and C2.

Similarly, in Fig. 3 and 5, curve C4 illustrates a series of side-slip angles $\beta$ measured on a dry surface, and C5, C6 are the respective estimated counterparts $\beta^*$ from the observer tuned for a dry surface and the observer tuned for a snow surface, respectively. Here, there is a good agreement between C4 and C5, but gross differences between C4 and C6.

In summary, while each observer can be trusted to give reasonable estimates $\beta^*$ if the actual friction coefficient of the ground is exactly that for which the observer is tuned, the results become unreliable whenever there is a noticeable difference between the actual surface friction coefficient and the one for which the observer is tuned.

In practice, it is hard to tell what the friction coefficient of the road will actually be. Cases are rather rare where a vehicle will run so continuously on a snow or ice surface for the prior art device to adapt to it and actually select the observer which is tuned for snow or ice. Much more common are situations in which a road surface is partly snowy or partly iced, and has an effective friction coefficient somewhere between that of a dry road and that of snow or ice, respectively. In such a situation, none of the observers can be trusted to give an accurate estimate of the side-slip angle.

The object of the present invention is to propose a side-slip angle estimating method and apparatus capable of giving a reasonable estimate at arbitrary road friction conditions.

This object is achieved by a method of estimating the side-slip angle comprising the steps of

a) continuously producing a first estimate of the side-slip angle for a first type of ground based on vehicle kinematic data;

b) continuously producing a second estimate of the side-slip angle for a second type of ground based on vehicle kinematic data;

c) detecting vehicle lateral acceleration;

d) based on said detected lateral acceleration, estimating a current value of the friction coefficient between the tires of the vehicle and the ground;

e) if the estimated current value is similar to the friction coefficient of the first type of ground, outputting the first estimate;

f) if the estimated current value is similar to the friction coefficient of the second type of ground, outputting the second estimate; and

g) if the estimated current value is in a range between the friction coefficients of said first and second types of ground, outputting an estimate between said first and second estimates.

In short, according to the present invention, it is not necessary to choose between a first and second estimate, but a value somewhere in between the first and the second estimate can be output as a estimated side-slip angle if the current friction coefficient of the ground seems to be between those for which the first and second estimates were calculated.

Preferably, step g) further comprises the steps of setting weighting coefficients $w_1$, $w_2$ for said first and second estimates, wherein $w_i$, i=1, 2, is a continuous function of $\mu^*$, $\mu^*$ is the estimated current value of the friction coefficient, $\mu_i$ is the friction coefficient of the i-th type of ground, and $w_i(\mu^*=\mu_i)=1$. In this way, if the estimated current value of the friction coefficient $\mu^*$ is close to $\mu_1$ or to $\mu_2$, the estimate of the side-slip angle obtained in step g) will be close to the first or the second estimate, respectively. Preferably, $w_2 = 1-w_1$ holds for any value of $\mu^*$.

Of course, there may be more than two estimates produced simultaneously for different types of ground. In particular, if the second type of ground is assumed to have a higher friction coefficient than that of the first type, a third estimate of the side-slip angle may continuously be produced for a third type of ground having a higher friction coefficient than that of the second type based on vehicle kinematic data, and, if the estimated current value of the friction coefficient is in a range between the friction coefficients of said second and third types of ground, an estimate between said second and third estimates should be output.

The step of estimating a current value of the friction coefficient preferably comprises identifying a maximum of the lateral acceleration. It is assumed that this maximum is related to the friction coefficient, since the absolute maximum of the lateral acceleration on a ground having a friction coefficient $\mu$ is $\mu g$, g being the gravity acceleration.

If the vehicle is cornering slowly, the lateral acceleration will be low regardless of the type of ground. Therefore, in order to avoid unreasonably low estimates of the friction coefficient, identification of the maximum of the lateral acceleration is preferably carried out only while the lateral acceleration exceeds a predetermined threshold.

A further useful criterion is that the maximum of the lateral acceleration should be detected only while the time derivative of the lateral acceleration is below a predetermined threshold. Here, it is assumed that a low value of this derivative will usually occur if the lateral acceleration is saturated or at least close to saturating.

Another useful criterion for saturation is that the difference between the detected lateral acceleration and an expected lateral acceleration calculated based on vehicle longitudinal velocity and steering wheel angle should be above a predetermined threshold.

A further criterion is that the difference between detected and expected yaw rates should be above a predetermined threshold.

A method of the invention may be embodied in the form of a data processor program product comprising a data carrier in which program structures for carrying out the method are recorded in machine-readable form.

The object of the invention is further achieved by an apparatus for estimating the side-slip angle of a vehicle comprising,

a) a first observer for continuously producing a first estimate of the side-slip angle for a first type of ground, based on vehicle kinematic data;

b) a second observer for continuously producing a second estimate of the side-slip angle for a second type of ground based on vehicle kinematic data;

c) a sensor for detecting vehicle lateral acceleration;

d) processing means for estimating a current value of the friction coefficient between the tires of the vehicle and the ground based on said detected lateral acceleration,

for outputting the first estimate, if the estimated current value is similar to the friction coefficient of the first type of ground;

for outputting the second estimate of the estimated current value similar to the friction coefficient of the second type of ground; and

for outputting an estimate between said first and second estimates if the estimated current value is in a range between the friction coefficients of said first and second types of a ground.

Further features and advantages of the invention will become apparent from the subsequent description of embodiments thereof referring to the appended drawings.

Fig. 1          already discussed, illustrates tracks of a cornering vehicle;

Fig. 2 to 5     already discussed, illustrate measured and estimated side-slip angles of a vehicle;

Fig. 6          is an overall block diagram of a side-slip angle estimating apparatus according to the present invention;

Fig. 7          is a block diagram of one of the three observers of the side-slip angle estimating apparatus of Fig. 6.

Fig. 8          is a block diagram of the surface friction arbitrating unit of Fig. 6; and

Fig. 9          illustrates weighting coefficients of side-slip angles $\beta^*$ estimated by different observers as a function of estimated surface friction $\mu^*$;

Fig. 6 is a schematic block diagram of an apparatus for estimating the body side-slip angle $\beta$ of a motor vehicle in real time. The apparatus comprises three observers $10_j$, j=1, 2, 3, a desired vehicle response calculating unit 11 and a surface friction arbitrating unit 12 connected in parallel to a CAN bus 1.

The response calculating unit 11 is designed to calculate from vehicle kinematic data available on the CAN bus, such as the steering wheel angle SWA and the vehicle longitudinal velocity Vel, a lateral acceleration AY* and/or yaw rate YR*. This can be done by associating to a measured steering wheel angle SWA the radius of the associated trajectory of the vehicle at the low speed limit, and then calculating the lateral acceleration AY* or the yaw rate YR* that would result if this trajectory was followed exactly at the speed Vel.

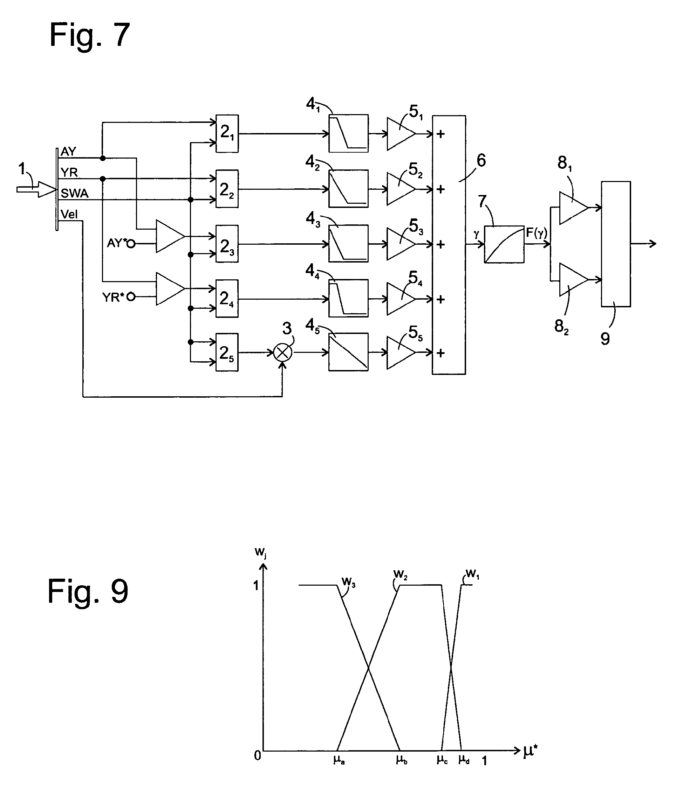

Fig. 7 is a block diagram showing the structure of one of the observers $10_j$. Via the CAN bus 1, the observer $10_j$ receives input data, namely vehicle lateral acceleration AY, yaw rate YR, steering wheel angle SWA and longitudinal velocity Vel. The observer $10_j$ comprises five filters $2_1$ to $2_5$, all of identical design. Each of the filters $2_1$ to $2_5$ has a control input which receives steering wheel angle data SWA from bus 1. A data input of filter $2_1$ receives lateral acceleration data AY. A data input of filter $2_2$ receives the yaw rate data YR. A data input of filter $2_3$ receives a first error signal representing the difference between the measured lateral acceleration AY and the expected lateral acceleration AY* output by response calculating unit 11.

Similarly, the discrepancy between the measured yaw rate YR and the desired yaw rate YR* from response calculating unit 11 is input into filter $2_4$ as a second error signal.

Filter $2_5$ has the steering wheel angle signal SWA applied to it at its data input and at its control input.

Each of the filters $2_1$ to $2_5$ has two processing stages. In the first stage, it forms the absolute amount of its input data. The purpose of the second stage is to cancel out the effects of rapid zero crossings in the input data. This is done by sampling the input data if the time derivative of the amount of the input signal is below a predetermined negative first threshold, indicating there is a rapid manoeuvre and that a rapid zero crossing might be immanent, and if the absolute value of the steering wheel angle SWA is above a predetermined second threshold, indicating that the vehicle is going through a narrow curve. The output of the filter $2_i$ is held constant at the sampled value until either the absolute value of the time derivative of the steering wheel angle SWA is below a third threshold which is lower than the amount of the first threshold, indicating that the input signal of the filter is not in a transient state any more, and the absolute value of the time derivative of the steering wheel angle is smaller than a forth threshold which is smaller than the second, indicating that no more rapid zero crossing is to be expected, or if the value of the input signal exceeds the currently held value.

The output of filter $2_5$ is multiplied with the vehicle speed Vel in a multiplier 3.

Output data from filters $2_1$ to $2_4$ and multiplier 3 are applied as address data to look-up tables $4_1$ to $4_5$. Each look-up table $4_i$, i=1, ..., 5, stores a characteristic function $f_i$ which can take values from 1 to 0, which has at least a first range of arguments in which it is linear, and which equals either 1 or 0 in second or third argument ranges adjacent to said first range. In other words, the characteristic function may be written as

$$f_i(x) = \begin{cases} 1 & if & x < (b_i - 1)/a_i \\ -a_i x + b_i & if & (b_i - 1)/a_i \le x < b_i/a_i \\ 0 & if & b_i/a_i < x \end{cases}$$

wherein $a_i > 0$, $b_i > 1$, and x is the output of filter $2_i$, i=1, ..., 4 or multiplier 7, as appropriate.

The output of each look-up table $4_i$ is weighted by a predetermined weighting factor $w_i$ in a multiplier $5_i$. The weighting factors are predetermined so that

$$\sum_i w_i = 1$$

holds.

It is readily apparent that the multipliers $5_i$ might be dispensed with by storing in the look-up tables $4_i$ characteristic functions $w_i*f_i(x)$ instead of $f_i(x)$, as described above.

The outputs of the multipliers $5_i$ are summed in adder 6. The output $\gamma$ of adder 6 is referred to here as the tire degree of linearity $\gamma$. It can take any value from 0 to 1. If $\gamma$ is close to 1, the behaviour of the tire can be regarded as linear, i.e.

$$F_y(t) = C\beta(t)$$

with C=constant is a good approximation for the relation between the side-slip angle $\beta$ of the tire and the lateral force $F_y$ to which the tire is subject. The smaller $\gamma$ is, the less exact is the approximation, and if $\gamma$ approaches zero, the tire is losing hold, and the vehicle is becoming unstable.

Provided that the weighting factors $w_i$ in multipliers $5_i$ and the first ranges $(b_i-1)/a_i \leq x < b_i/a_i$ of the characteristics in the look-up tables $4_i$ are well optimized, the tire degree of linearity $\gamma$ is very closely correlated to the instantaneous tire stiffness, so that a good approximation of the tire stiffness can be obtained by multiplying $\gamma$ by a constant factor.

A still better approximation can be achieved if the tire degree of linearity $\gamma$ is applied as an argument to a further characteristic $F(\gamma)$ in look-up table 7. The characteristic $F(\gamma)$ in look-up table 7 is a monotonically increasing function with decreasing slope, e.g. a portion of a parabola. Due to the decreasing slope of the characteristic $F(\gamma)$, a predetermined variation in $\gamma$ will cause a rather small fluctuation in the output $F(\gamma)$ of look-up table 7 when $\gamma$ is high, i.e. when the stability of the vehicle is high and the tires have tight hold on the road. When $\gamma$ is low, however, the predetermined variation causes a larger variation in the output of look-up table 7, so that in a situation where the stability of the vehicle is reduced, a clearly detectable variation is output from look-up table 7.

It should be noted here that the characteristics in the lookup tables $4_i$ and 7, the weighting factors of multipliers $5_i$ and the thresholds of filters $2_i$ are dependent on the friction coefficient between tire and road, i.e. each of the three observers $10_j$, being tuned for a specific type of road surface, has its own set of characteristics.

An estimated tire stiffness $C_f$, $C_r$ of front and rear tires, respectively is obtained by multiplying $F(\gamma)$ by predetermined constant factors $C_{f,0}$ $C_{r,0}$ in multipliers $8_1$, $8_2$. A Kalman filter 9 estimates the vehicle body side-slip angle $\beta$ based on these tire stiffnesses and using the lateral speed of the vehicle and its yaw rate as states.

It should be noted here that for any type of ground, the correct characteristics to be stored in the lookup tables $4_i$ and 7, weighting factors of multipliers $5_i$ and thresholds of filters $2_i$ are a priori unknown. However, they can straightforwardly be found by optimization. To this effect, it is sufficient to collect three sets of experimental data on the side-slip angle $\beta$ for a given type of motor vehicle at a large number of different values of AY, YR, SWA and Vel, namely one set for dry ground, another for snow and a third for ice, so that the correlation between the side-slip angle P estimated by each of the observers $10_1$, $10_2$, $10_3$, fits the associated set of experimental data as closely as possible.

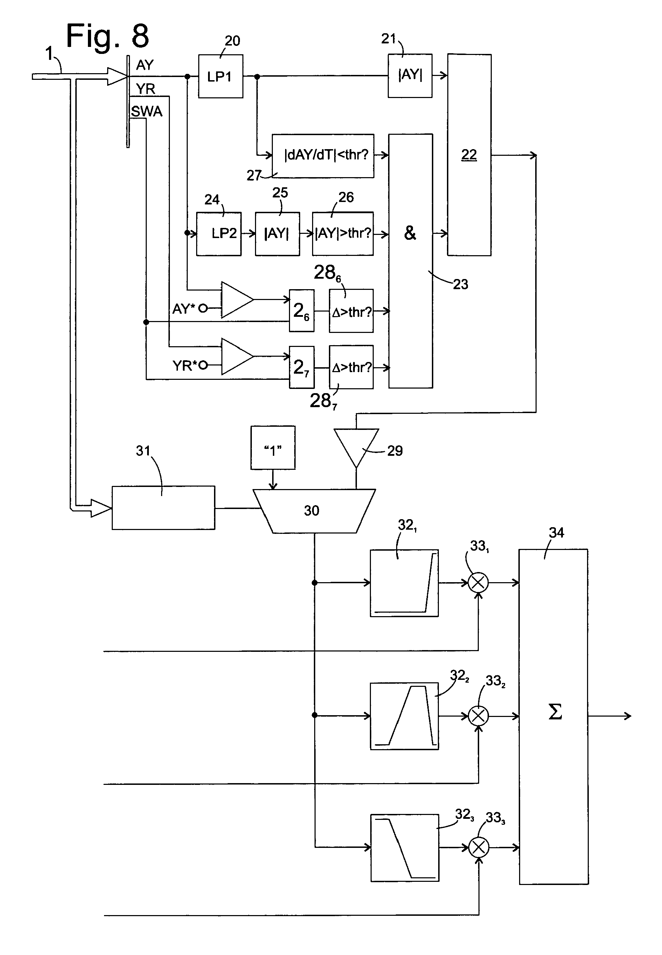

The side-slip angles P estimated by the three observers $10_1$, $10_2$, $10_3$ differ substantially from each other, as demonstrated above referring to Fig. 2 to 5. A reliable estimate of the friction coefficient of the road surface on which the vehicle is currently moving is therefore a prerequisite for estimating the side-slip angle. A block diagram of a device for estimating the current friction coefficient is shown schematically in Fig. 8. The operation of this device is based on the idea that the friction coefficient imposes an upper limit of the lateral acceleration to which the vehicle can be subject.

In the arbitrating unit 12 of Fig. 8, a first low-pass filter 20 receives real-time lateral acceleration data AY from CAN bus 1. Absolute value circuit 21 outputs the absolute amount of the low pass filtered data from filter 20. The output of absolute value circuit 21 is input into a maximum detection circuit 22.

Maximum detection circuit 22 is adapted to sample and output a maximum value of the data input from circuit 21 as long as it receives an enable signal from AND gate 23. While the enable signal is not received, the output of maximum detection circuit 22 is identical to its input.

AND gate 23 has four inputs. At the first input, there are connected in series a second low-pass filter 24 receiving lateral acceleration AY data from CAN bus 1 and having a lower cut-off frequency than filter 20, a second absolute value circuit 25 and a threshold comparator 26. The output of comparator 26 is true only if the amount of the low pass filtered lateral acceleration data from absolute value circuit 25 is above a predetermined threshold, e.g. 0.75 ms$^{-2}$. In other words, if the lateral acceleration is low, and there is no risk that it will have a substantial impact on the behaviour of the vehicle, AND gate 23 will not output the enable signal to maximum detection circuit 22.

A second input of AND gate 23 has another comparator 27 connected to it for forming the amount of the time derivative dAY/dt of the low-pass filtered lateral acceleration AY and outputting "true" only if the derivative is below a predetermined threshold. It is assumed that if |dAY/dt| is high, the tires must be far from saturation, so that a maximum of |AY| detected at such a time is not likely to give a reasonable upper limit of the lateral acceleration.

The remaining inputs of AND gate 23 have filters $2_6$, $2_7$ connected to them via comparators $28_6$, $28_7$. These filters $2_6$, $2_7$ are identical in design to the filters $2_1$ to $2_5$ described above with respect to fig. 7, and like filters $2_3$, $2_4$, they receive a SWA signal at a control input and first and second error signals, respectively, at their data inputs. In fact, the filters $2_6$, $2_7$ shown in Fig. 8 might be dispensed with if the inputs of comparators $28_6$, $28_7$ were connected to the outputs of filters $2_3$, $2_4$, respectively, of fig. 7. The outputs of comparator $28_6$ and $28_7$ become "true" if the output of its associated filter is above a predetermined threshold.

AND gate 23 outputs the enable signal while all of its four input signals are "true". While enabled, maximum detection circuit 22 continuously stores and outputs the highest value of the lateral acceleration AY it has received from absolute value circuit 21 since it began to receive the enable signal. As soon as the enable signal goes off, the storing process is halted, and the most recently stored value of the maximum lateral acceleration is held and output to multiplier 29. When the enable signal is received again, the value of the maximum lateral acceleration is reset, and circuit 22 restarts storing the values of the maximum lateral acceleration.

In multiplier 29 the output of maximum detection circuit 22 is normalized by 1/g = 1/9.81 ms$^{-2}$. The output of multiplier 29 is the estimated friction coefficient $\mu^*$ of the road surface on which the vehicle is currently moving.

The output of multiplier 29 is provided to a multiplexer 30, which has a constant signal of value "1" applied to another one of its inputs. Multiplexer 30 is controlled by a monitoring circuit 31 which monitors the steering wheel angle SWA, the lateral acceleration AY and the yaw rate YR in order to detect straight line driving. If this circuit 31 detects that the vehicle has been driving along a straight line for a predetermined time, it will control multiplexer 30 to switch through the constant signal to its output.

The output of multiplexer 30 addresses in parallel three look-up tables $32_j$, j=1, 2, 3. There are three multipliers $33_j$, j=1, 2, 3, each of which has an input connected to the output of associated lookup table $32_j$ and another input which receives the estimated side-slip angle $\beta^*_j$ from its associated observer $10_j$. The look-up tables $32_j$ store characteristic weighting functions $w_j(\mu^*)$ which indicate the weight or the "reliability" of the side-slip angle estimate $\beta^*_j$ of observer $10_j$ as a function of the estimated friction coefficient $\mu^*$ output from multiplexer 30. A weighted sum

$$\beta^*(\mu^*) = \sum_{j=1}^{3} \beta^*_j \, w_j(\mu^*)$$

of the three estimated side-slip angle $\beta^*_j$ is formed in adder 34.

Examples of the characteristic weighting functions $w_j(\mu^*)$ are shown in the diagram of Fig. 9. Weighting function $w_3$, being associated to an ice surface the friction coefficient $\mu_3$ of which is smaller than $\mu_a$, equals 1 in a range $0 \leq \mu^* \leq \mu_a$. In this range, $w_2 = w_1 = 0$ hold. In the range $\mu_a \leq \mu^* > \mu_b$, $w_3$ gradually decreases to zero, whereas the weighting function $w_2$ associated to a snow surface having a friction coefficient $\mu_2$ larger than $\mu_b$ increases from 0 to 1, and $w_1=0$. In other words, if the estimated friction coefficient $\mu^*$ from multiplexer 30 is between $\mu_a$ and $\mu_b$, arbitrating unit 12 will output as an estimated side-slip angle a weighted average of the estimates produced by observers $10_3$, $10_2$.

If $\mu^*$ is between $\mu_b$ and $\mu_c$, i.e. in a range around the friction coefficient $\mu_2$ of a snow surface, then $w_2 = 1$, and $w_1 = w_3 = 0$, so that the arbitrating unit 12 outputs the estimate of observer $10_2$.

If $\mu_c \leq \mu^* < \mu_d$, $\mu_d$ being smaller than the friction coefficient $\mu_1$ of dry ground for which observer $10_1$ is tuned, the output of arbitrating unit 12 is a weighted average again, this time between the estimates of observers $10_2$ and $10_1$. If $\mu^*$ is above $\mu_d$, in a range corresponding to dry ground, and if $\mu^*$ is 1, indicating non-availability of a friction coefficient estimate, arbitrating unit 12 outputs the estimate of observer $10_1$ alone.

Obviously, in the above, $\mu_a$ might be set equal to $\mu_3$, $\mu_b$ and $\mu_c$ might be set equal to $\mu_2$, and $\mu_d$ equal to $\mu_1$, so that an interpolation between two estimates of the side-slip angle is carried out whenever the estimated friction coefficient is between $\mu_3$ and $\mu_2$ or between $\mu_2$ and $\mu_1$.

The quality of the side-slip angle estimation may be further improved if experimental data on the side-slip angle $\beta$ are obtained not only for the friction coefficients $\mu_1$ of dry ground, $\mu_2$ of snow and $\mu_3$ of ice, but also for friction coefficients between $\mu_3$ and $\mu_2$ or between $\mu_2$ and $\mu_1$. Based on these data, it is possible to fit the weighting functions $w_j(\mu^*)$ so that the best possible agreement between measured and estimated side-slip angles is achieved. In case of the piecewise linear weighting functions $w_j(\mu^*)$ shown in Fig. 9, range limits $\mu_a$, $\mu_b$, $\mu_c$, $\mu_d$, can be taken as fitting parameters.

It is readily apparent that the number of observers might be reduced to two, or might be increased to four more.

It was found that three observers tuned to typical friction coefficients of ice, snow and dry road surfaces are sufficient to estimate the side-slip angle of a vehicle with good accuracy even if the actual friction coefficient of the ground on which the vehicle is driving is somewhere between these typical values. If it turned out that under some circumstances there is a range of friction coefficients where the side-slip angle cannot be estimated with sufficient accuracy based on these three observers, it is easily seen that a further observer tuned for a friction coefficient within this range might be introduced, and that, vice versa, an observer might be dispensed with if its estimates can be approximated with sufficient accuracy by interpolating the estimates of the remaining ones.

**List of reference signs**

| | |
|---|---|
| 1 | CAN bus |
| 2 | filter |
| 3 | multiplier |
| 4 | look-up table |
| 5 | multiplier |
| 6 | adder |
| 7 | look-up table |
| 8 | multiplier |
| 9 | Kalman filter |
| 10 | Observer |
| 11 | response calculating unit |
| 12 | arbitrating unit |
| 20 | low-pass filter |
| 21 | absolute value circuit |
| 22 | maximum detection circuit |
| 23 | AND gate |
| 24 | low-pass filter |
| 25 | absolute value circuit |
| 26 | comparator |
| 27 | comparator |
| 28 | comparator |
| 29 | multiplier |
| 30 | multiplexer |
| 31 | SWA monitoring circuit |
| 32 | look-up table |
| 33 | multiplier |
| 34 | adder |

**Claims**

1. A method of estimating the side-slip angle of a vehicle on arbitrary ground, comprising the steps of:

  a) continuously producing a first estimate ($\beta^*_1$) of the side-slip angle ($\beta$) for a first type of ground based on vehicle kinematic data;
  b) continuously producing a second estimate ($\beta^*_2$) of the side-slip angle for a second type of ground based on vehicle kinematic data;
  c) detecting vehicle lateral acceleration (AY);
  d) based on said detected lateral acceleration (AY), estimating a current value ($\mu^*$) of the friction coefficient ($\mu$) between the tires of the vehicle and the ground;
  e) if the estimated current value ($\mu^*$) is similar to the friction coefficient ($\mu_1$) of the first type of ground, outputting the first estimate ($\beta^*_1$);
  f) if the estimated current value ($\mu^*$) is similar to the friction coefficient ($\mu_2$) of the second type of ground, outputting the second estimate ($\beta^*_2$); and
  g) if the estimated current value ($\mu^*$) is in a range ($\mu_c \leq \mu^* > \mu d$) between the friction coefficients ($\mu_3, \mu_2$) of said first and second types of ground, outputting an estimate ($\beta^*$) between said first and second estimates ($\beta^*_1$,

$\beta^*_2$).

2. The method of claim 1, wherein in step g) comprises the steps of setting weighting coefficients $w_1$, $w_2$ for said first and second estimates, wherein $w_j$, j=1, 2, is a continuous function of $\mu^*$, $\mu^*$ is the estimated current value of the friction coefficient, $\mu_j$ is the friction coefficient of the j-th type of ground, and $w_j(\mu^*=\mu_j)=1$.

3. The method of claim 1 or 2, wherein the friction coefficient ($\mu_2$) of the second type of ground is lower than that ($\mu_1$) of the first type of ground, further comprising the steps of

> h) continuously producing a third estimate ($\beta^*_3$) of the side-slip angle for a third type of ground having a lower friction coefficient ($\mu_3$) than that ($\mu_2$) of the second type of ground based on vehicle kinematic data;
> i) if the estimated current value ($\mu^*$) is in a range ($\mu_a \le \mu^* > \mu_b$) between the friction coefficients ($\mu_2$, $\mu_3$) of said second and third types of ground, outputting an estimate ($\beta^*$) between said second and third estimates ($\beta^*_2$, $\beta^*_3$).

4. The method of any of the preceding claims, wherein at least one of said estimates ($\beta^*_1$, $\beta^*_2$, $\beta^*_3$) is obtained by Kalman filtering.

5. The method of any of the preceding claims, wherein step d) comprises identifying a maximum of the lateral acceleration.

6. The method of claim 5, wherein identification of the maximum of the lateral acceleration is carried out only while the lateral acceleration (AY) exceeds a predetermined threshold.

7. The method of claim 5 or 6, wherein identification of the maximum of the lateral acceleration is carried out only while the amount of the time derivative of the lateral acceleration is below a predetermined threshold.

8. The method of any of claims 5 to 7, further comprising the step of calculating an expected lateral acceleration (AY*) based on vehicle longitudinal velocity (Vel) and steering wheel angle (SWA), and wherein identification of the maximum of the lateral acceleration (AY) is carried out only while the difference between detected and expected lateral accelerations (AY-AY*) is above a predetermined threshold.

9. The method of any of claims 5 to 8, further comprising the step of calculating an expected yaw rate (YR*) based on vehicle longitudinal velocity (Vel) and steering wheel angle (SWA), and wherein identification of the maximum of the lateral acceleration is carried out only while the difference between detected and expected yaw rates (YR-YR*) is above a predetermined threshold.

10. A data processor program product comprising a data carrier in which program instructions for enabling a data processor to carry out the method of one of claims 1 to 9 are recorded in machine-readable form.

11. An apparatus for estimating the side-slip angle of a vehicle on arbitrary ground, comprising:

> a) a first observer ($10_1$) continuously producing a first estimate ($\beta^*_1$) of the side-slip angle for a first type of ground based on vehicle kinematic data;
> b) a second observer ($10_2$) for continuously producing a second estimate ($\beta^*_2$) of the side-slip angle for a second type of ground based on vehicle kinematic data;
> c) a sensor for detecting vehicle lateral acceleration (AY);
> d) processing means (12) for estimating a current value of the friction coefficient between the tires of the vehicle and the ground based on said detected lateral acceleration,
> for outputting the first estimate if the estimated current value is similar to the friction coefficient of the first type of ground;
> for outputting the second estimate if the estimated current value is similar to the friction coefficient of the second type of ground; and
> for outputting an estimate between said first and second estimates if the estimated current value is in a range between the friction coefficients of said first and second types of ground.

12. The apparatus of claim 11, wherein the first and/or second observer comprises a Kalman filter.

## Fig. 1

## Fig. 6

Fig. 2

Snow surface

Fig. 3

Dry surface

Fig. 4

Snow surface

Fig. 5

Dry surface

## Fig. 7

## Fig. 9

Fig. 8

**European Patent Office**

## EUROPEAN SEARCH REPORT

Application Number

EP 08 00 3318

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 374 172 B1 (YAMAGUCHI HIROYUKI [JP] ET AL) 16 April 2002 (2002-04-16) * column 5, line 15 - column 5, line 20 * * column 9, line 57 - column 10, line 64; figures 3,12 * | 1-12 | INV. B60T8/172 |
| Y | US 6 161 905 A (HAC ALEKSANDER BOGUSLAW [US] ET AL) 19 December 2000 (2000-12-19) * column 5, line 56 - column 6, line 16 * | 1-5, 10-12 | |
| Y | US 2002/022915 A1 (CHEN HSIEN HENG [US] ET AL) 21 February 2002 (2002-02-21) * page 4, paragraph 46 - page 5, paragraph 61 * | 6,7,9 | |
| Y | US 6 125 319 A (HAC ALEKSANDER BOGUSLAW [US] ET AL) 26 September 2000 (2000-09-26) * column 7, line 39 - column 8, line 24 * | 8,9 | |
| A | EP 0 781 695 A (TOYOTA MOTOR CO LTD [JP]) 2 July 1997 (1997-07-02) * figures 6,7,12 * | 1-12 | |
| A | US 6 349 256 B1 (KIN KEIYU [JP] ET AL) 19 February 2002 (2002-02-19) * column 5, line 1 - column 13, line 47; figures 4,10,12,14 * | 1-12 | TECHNICAL FIELDS SEARCHED (IPC) |
| A | EP 1 627 790 A (HONDA MOTOR CO LTD [JP]) 22 February 2006 (2006-02-22) * page 7, line 46 - page 13, line 8; figures 3,4,7 * | 1-12 | B60T |

The present search report has been drawn up for all claims

| Place of search | Date of completion of the search | Examiner |
|---|---|---|
| Munich | 22 July 2008 | Marx, Winfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 00 3318

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2008

| Patent document cited in search report | | Publication date | Patent family member(s) | | Publication date |
|---|---|---|---|---|---|
| US 6374172 | B1 | 16-04-2002 | DE | 10049565 A1 | 03-05-2001 |
| | | | JP | 2001108701 A | 20-04-2001 |
| US 6161905 | A | 19-12-2000 | NONE | | |
| US 2002022915 | A1 | 21-02-2002 | US | 2002042671 A1 | 11-04-2002 |
| US 6125319 | A | 26-09-2000 | DE | 19938935 A1 | 06-07-2000 |
| EP 0781695 | A | 02-07-1997 | DE | 69624210 D1 | 14-11-2002 |
| | | | DE | 69624210 T2 | 10-07-2003 |
| | | | US | 5899952 A | 04-05-1999 |
| US 6349256 | B1 | 19-02-2002 | NONE | | |
| EP 1627790 | A | 22-02-2006 | US | 2006041365 A1 | 23-02-2006 |

EPO FORM P0459

For more details about this annex : see Official Journal of the European Patent Office, No. 12/82

**EP 2 093 114 A1**

## REFERENCES CITED IN THE DESCRIPTION

### Patent documents cited in the description

- WO 2001010137 A